# EUROPEAN PATENT APPLICATION

(11) **EP 3 979 519 A1**
(43) Date of publication of application: **06.04.2022**
(21) Application number: 21200759.5
(22) Date of filing: 04.10.2021
(51) Int. Cl.: H04B 7/185, H04W 4/30

(54) **AUTOMATION OF COMMUNICATION, NAVIGATION, SURVEILLANCE, SENSOR AND SURVIVABILITY SYSTEM CAPABILITIES IN PRIMARY, ALTERNATE, CONTINGENCY, AND EMERGENCY SCHEMES FOR FACILITATING SEAMLESS COMMAND, CONTROL, COMMUNICATION, COMPUTER, CYBER-DEFENSE, COMBAT, INTELLIGENCE, SURVEILLANCE, AND RECONNAISSANCE CAPABILITIES**

(30) Priority: 02.10.2020 US 202017062201
(71) Applicant: Rockwell Collins, Inc., Cedar Rapids, IA 52498 (US)
(72) Inventor: GRAF, Joseph T., Center Point, IA (US); BOUIS, Jeffrey D., Frisco, TX (US); BOUSSELOT, Matthew D., Marion, IA (US)
(74) Representative: Dehns

(57) **Abstract**

A communication system is enclosed. The communication system includes a communication sub-system (105) configured to transmit and receive signals from one or more waveforms of a plurality of waveforms. The communication sub-system further contains one or more processors (125) and memory with instructions that include receiving an artificial intelligence input configured to instruct the one or more processors to prepare an instantiation of a selected waveform. The instructions further include preparing the communication sub-system to transmit, receive, and instantiate the selected waveform. The communication system further includes an artificial intelligence engine (145) in communication with the one or more processors configured to: receive operational data from one or more operation systems; determine, based on the operational data, the selected waveform; prepare the artificial intelligence input based on the selected waveform; and send the artificial intelligence input to the one or more processors. A method for switching waveforms is also disclosed.

## Description

### BACKGROUND

Many aircraft communication systems are configured to implement more than one radio communication method, or waveform, in order to communicate with a base station or another aircraft. Having a variety of backup waveforms ensures that communication is not lost when flight conditions render currently-utilized waveform inoperable. The pilot may manually switch which waveform is being used on the aircraft. However, as pilots are often overloaded by tasks during flight, manually switching waveforms during flight may add to task saturation.

Switching waveforms may also be problematic during time-critical events. For example, initializing a waveform during flight may take several seconds to several minutes. During this time, the pilot may not be able to communicate, potentially threatening the safety of the pilot and crew. Therefore, it is desirable to provide a system or method that avoids the shortcomings of conventional approaches.

### SUMMARY

A communication system is disclosed. In one or more embodiments, the communication system includes a communication sub-system. The communication sub-system includes one or more transmitters configured to transmit an output signal, the one or more transmitters collectively operable over a plurality of waveforms. The communication sub-system further includes one or more receivers configured to receive an input signal, the one or more receivers collectively operable over the plurality of waveforms. The communication sub-system further includes one or more processors coupled to the one or more transmitters and the one or more receivers. The communication sub-system further includes a memory coupled to the one or more processors and having instructions stored on the memory that are executed by the one or more processors. The instructions include instantiating a selected waveform, wherein at least one of the one or more transmitters transmit an output signal of the selected waveform and at least one of the one or more receivers receive an input signal of the selected waveform. The communication system further includes an artificial intelligence engine in communication with the one or more processors and the memory. The artificial intelligence engine is configured to receive operational data from one or more operation systems. The artificial intelligence engine is further configured to determine, based on the operational data, the selected waveform. The artificial intelligence engine is further configured to prepare the artificial intelligence input based on the selected waveform. The artificial intelligence engine is further configured to send the artificial intelligence input to the one or more processors.

In some embodiments of the communication system, the artificial intelligence engine is further configured to apply a machine learning model to analyze the operational data.

In some embodiments of the communication system, the artificial intelligence engine is further configured to generate the machine learning model. Generating the machine learning model includes collecting the operational data. Generating the machine learning model further includes processing the operational data. Generating the machine learning model further includes developing the machine learning model via the processed data. Generating the machine learning model further includes training the machine learning model. Generating the machine learning model further includes evaluating the machine learning model. Generating the machine learning model further includes tuning one or more parameters of the machine learning model.

In some embodiments of the communication system, the one or more processors are further configured to receive the artificial intelligence input, prepare the communication sub-system to transmit the output signal of the selected waveform, and prepare the communication sub-system to receive the input signal of the selected waveform.

In some embodiments of the communication system, the selected waveform comprises the primary waveform, the alternate waveform, the contingency waveform, or the emergency waveform.

In some embodiments of the communication system, the artificial intelligence input is further configured to instruct the one or more processors to deactivate a preceding waveform.

In some embodiments of the communication system, a switching of the preceding waveform to the selected waveform is coordinated.

In some embodiments of the communication system, the preceding waveform and the selected waveform are communicating a same message.

In some embodiments of the communication system, the switching of the preceding waveform to the selected waveform is seamless, wherein at least one characteristic of the same message is communicated without interruption or delay during the switching of the preceding waveform to the selected waveform.

In some embodiments of the communication system, the communication system of claim 1, wherein the artificial intelligence input is further configured to instruct the one or more processors to enter a network.

In some embodiments of the communication system, the artificial intelligence engine is further configured to determine unnecessary waveforms that may be deactivated within the communication system.

In some embodiments of the communication system, the communication sub-system is disposed in a vehicle.

A method to switch a waveform used by a communication system from a preceding waveform to a selected waveform is also disclosed. In one or more embodiments, the method includes receiving operational data from one or more operation systems, wherein the operational data is received by an artificial intelligence engine. The method further includes preparing an artificial intelligence input based on the operational data, the artificial intelligence input designating the selected waveform. The method further includes sending the artificial intelligence input to a communication sub-system. The method further includes preparing the communication sub-system to at least one of transmit or receive the selected waveform. The method further includes instantiating the selected waveform and deactivating the preceding waveform, wherein the selected waveform and the preceding waveform are communicating a same message, wherein instantiating the selected waveform and deactivating the preceding waveform does not delay or interrupt at least one characteristic of the same message.

In some embodiments of the method, preparing the artificial intelligence input based on the operational data further comprises processing the operational data. Preparing the artificial intelligence input based on the operational data may further comprise developing a machine learning model via the processed data. Preparing the artificial intelligence input based on the operational data may further comprise training the machine learning model. Preparing the artificial intelligence input based on the operational data may further comprise evaluating the machine learning model. Preparing the artificial intelligence input based on the operational data may further comprise tuning one or more parameters of the machine learning model. Preparing the artificial intelligence input based on the operational data may further comprise applying query data to the machine learning model to generate the artificial intelligence input.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating a communication system, in accordance with one or more embodiments of this disclosure;
FIG. 2 is a flow diagram illustrating an implementation of the communication system, in accordance with one or more embodiments of this disclosure;
FIG. 3 is a flowchart illustrating a method for generating a machine learning model, in accordance with one or more embodiments of this disclosure;
FIG. 4 illustrates an environment for the communication system, in accordance with one or more embodiments of this disclosure;
FIG. 5 illustrates an environment for the communication system, in accordance with one or more embodiments of this disclosure;
FIG. 6 illustrates an environment for the communication system, in accordance with one or more embodiments of this disclosure; and
FIG. 7 is a flowchart illustrating a method for switching a waveform, in accordance with one or more embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

A communication system is disclosed. More specifically, an artificial intelligence-assisted communication system is disclosed that can utilize multiple waveforms, can determine when the communication system will need to switch from a currently-used waveform to a new waveform, and can perform the switch seamlessly without losing data. Many aircraft systems are capable of communicating via multiple waveforms, each of which have specific advantages. For example, when communicating between two aircraft under line-of-sign (LOS) conditions, the aircraft may use a high data transfer waveform such as the Advanced Tactical Data Link (ATDL). However, communication via the ATDL waveform may not be possible under some beyond-line-of-sight (BLOS) conditions, such as when the two aircraft are on opposite sides of a mountain. Under these conditions, the communication system must change waveforms. For example, the communication system may switch to using the satellite-based Mobile User Object System (MUOS) waveform, that would allow two aircraft to maintain a communication link, albeit with a potentially lower throughput than provided by an ATDL.

In many communication systems, transfer between waveforms is performed manually. For aircraft pilots, particularly military aircraft pilots, manual switching of waveforms, and the attention needed to oversee the switching of waveforms, further exacerbates the stress on the pilot during sensitive operations, leading to task saturation or task overload.

Switching from one waveform to another also takes time. For example, loading a different waveform onto an aircraft system has several time dependent steps. For instance, waveform software may need to be loaded into the communication system from on-board storage. The communication system may then need to verify the integrity of the loaded software. Several software services may be required load the waveform, increasing the switching time. If the waveform requires entry into a network, the switching is delayed even further. For example, an aircraft communication system entering a network (e.g., as an entry node), may be required to determine network time. This is especially relevant in a satellite denied environment. Even with global positioning systems (GPS), some networks require network time to achieve the necessary time precision for ranging and/or round-trip calculations. The time to initiate a waveform in a network is also delayed by the entry node listening to find neighbors, as well as the entry node announcing itself. The entry node may also need to wait for appropriate bandwidth allocation. Once the entry node has entered the network, the propagation of the entering node's identification and information through the network takes time, especially if the other party also needs to find a route to reply to the entering node. These systemic and networking delays may add minutes to reconnecting a communication link, which can be damaging, or even fatal, in the field. Operating multiple waveforms at the same time may also not be always feasible due to power, heat, and bandwidth issues

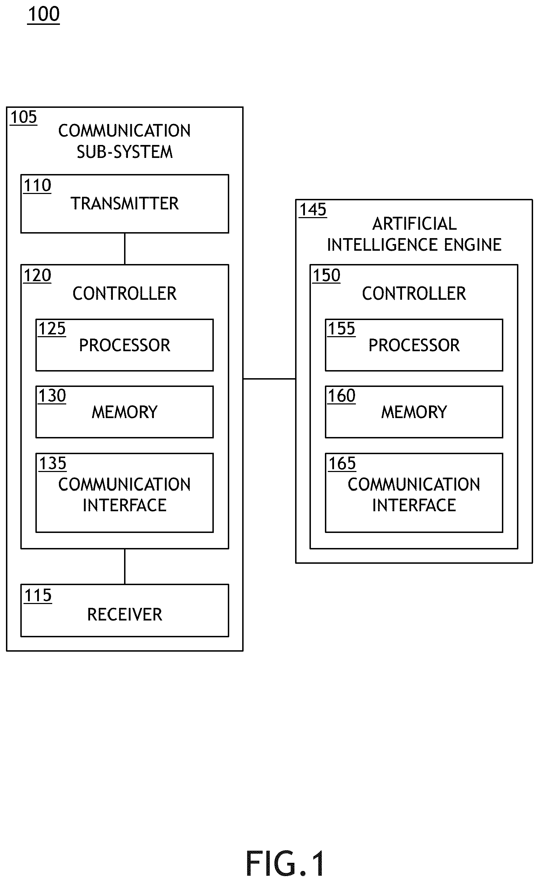

FIG. 1 discloses an artificial intelligence-guided communication system 100 (e.g., a system) configured to operatively switch between waveforms, in accordance with one or more embodiments of this disclosure. In embodiments, the communication system 100 includes a communication sub-system 105. The communication sub-system 105 includes componentry, hardware, software, and firmware needed to communicate with other operators (e.g., aircraft or base stations). For example, the communication system 100 may include the communication system 100 on-board an aircraft (i.e., the communication system 100 is disposed in an aircraft). For instance, the communication system 100 may be disposed in a helicopter.

In some embodiments, the communication sub-system 105 includes one or more transmitters 110 configured to transmit an output signal and one or more receivers 115 configured to receive an input signal. Both the one or more transmitters 110 and the one or more receivers 115 are operable over a plurality of waveforms. A waveform may be defined as an electromagnetic signal having one or more defined characteristics used in a communication system. Waveform characteristics may include but are not limited to frequency, amplitude, communication protocols, encryption capability, and data capacity. The plurality of waveforms may include any waveforms capable of use by a communication system 100 including but limited to SINCGARS, HAVE QUICK-I/II, SYNAPS, HF, UHF, VHF, SATCOM, SATURN, VULOS, WREN-NB, WREN-TSM, ATDL, MUOS, Link 16, and BE-CDL waveforms. For example, the waveform may be an ATDL waveform configured to deliver intelligence, surveillance, and reconnaissance (ISR) data or command and control (C2) data at greater than 1 Mbps.

It should be understood that the one or more transmitters 110 and the one or more receivers 115 may be combined as one or more transceivers (e.g., the one or more transmitters and the one or more receivers 115 sharing one or more elements). Therefore, the above description should not be interpreted as a limitation of the present disclosure, but merely an illustration.

The communication system 100 may include a single transmitter 110 configured to transmit multiple waveforms (e.g., ADTL and MUOS). The communication sub-system 105 may also include multiple transmitters 110, with each transmitter 110 configured to transmit one (e.g., only ADTL) or more (e.g., (MUOS and HF) waveforms. For example, a transmitter 110 may be configured to transmit ten waveforms. Correspondingly, communication system may include a single receiver 115 configured to receive multiple waveforms (e.g., ADTL and HF). The communication sub-system 105 may also include multiple receivers 115, with each receiver 115 configured one (e.g., only HF) or more (e.g., MUOS and ADTL) waveforms.

The communication sub-system 105 further includes a controller 120 being in communication with the communication system 100. The controller 120 is configured to receive, process, and transmit data within the communication sub-system 105 and/or the communication system 100. The controller 120 includes one or more processors 125 configured to perform functions or steps according to program instructions stored in a memory 130. The controller 120 is further configured to include a communication interface 135. The communication interface 135 is configured to facilitate data transfer between components of the communication sub-system 105 and/or other componentry within the communication system 100.

The one or more processors 125 may include any type of processing elements, including but not limited to integrated circuits (e.g., application specific integrated circuits (ASIC)) and field programmable gate arrays (FPGA). The one or more processors 125 may separately or collectively perform the functions and/or step as described herein. The memory 130 may also include resident or external memory for storing data, executable code, and other resident or external memory generated by the communication system 100. The controller 120 can execute one or more software programs embodied in a non-transitory computer readable medium (e.g., memory 130) that implement techniques described herein. In some embodiments, the controller 120 is not limited by the materials from which it is formed or the processing mechanisms employed therein and, as such, can be implemented via semiconductor(s) and/or transistors (e.g., using electronic integrated circuit (IC) components), and so forth.

The memory 130 can be an example of tangible, computer-readable storage medium that provides storage functionality to store various data and/or program code associated with operation of the communication system 100 and/or controller 120 such as software programs and/or code segments, or other data to instruct the controller 120 and possibly other components of the communication system 100, to perform the functionality described herein. Thus, memory 130 can store data, such as a program of instructions for operating the controller 120 and other components of the communication system 100. The memory can be integral with the controller 120, can comprise stand-alone memory, or can be a combination of both. Some examples of the memory 130 can include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface 135 can be operatively configured to communicate with componentry within the communication sub-system 105 and or the communication system 100. For example, the communication interface 135 may be configured to retrieve data from the controller 120, transmit data for storage in the memory 130, retrieve data from storage in the memory 130, and so forth. The communication interface 135 can also be communicatively coupled with the controller 120 to facilitate data transfer between components of the communication system 100, the communication sub-system 105 and the controller 120.

It should be noted that while the communication interface 135 is described as a component of the communication sub-system 105, one or more components of the communication interface 135 may be implemented as external components communicatively coupled to the communication sub-system 105, and other components of the communication system 100 via a wired and/or wireless connection.

In embodiments, the communication system 100 further includes an artificial intelligence engine 145 configured to predict which waveforms may need to be implemented within the communication system 100 and facilitate the implementation of these waveforms via the communication sub-system 105. In other words, the artificial intelligence engine is configured to develop and/or query (e.g., apply to operational data) a machine learning model designed to choose a selected waveform. The artificial intelligence engine 145 may be a stand-alone module that communicates with the communication sub-system 105. For example, the artificial intelligence engine 145 may have a controller 120 being in communication with the communication system 100, with the controller including processors 125 configured to perform functions or steps according to program instructions stored in a memory 160 (i.e., the instructions causing the one or more processors to perform the functions of steps), and a communication interface 165 configured to facilitate data transfer between components of the artificial intelligence engine 145 and/or other componentry within the communication system 100. The artificial intelligence engine 145 may be enclosed and/or incorporated within the communication sub-system 105. For example, the one or more processors 125 within the communication sub-system 105 may perform the functions and steps of the artificial intelligence engine 145. The artificial intelligence engine 145 may also be partially enclosed and/or incorporated within the communication sub-system 105. For example, one or more functions or steps performed by the artificial intelligence engine 145 may be executed by the one or more processors 125 of the communication sub-system 105. Any combination of componentry may be used for incorporating the functions of the artificial intelligence engine 145 and the communication sub-system 105 within the communication system 100. Therefore, the above description should not be interpreted as a limitation of the present disclosure, but merely an illustration.

The artificial intelligence engine 145 may be connected to the communication sub-system 105 via a wireline or wireless connection. For example, the artificial intelligence engine 145 may be configured as a tablet or mobile device (e.g., running an artificial intelligence system application (app)) that is connected wirelessly to the communication sub-system 105. For instance, the app may be a Future Airborne Capability Environment (FACE) compliant app, being compliant to the Unit of Conformance (UoC) and/or the Unit of Portability (UoP),

In another example, the artificial intelligence engine 145 may be configured as an add-on module to the mission computer (e.g., a line-replaceable unit (LRU). In another example, the artificial intelligence engine 145 may be hosted on the mission computer. Many manifestations of the artificial intelligence engine are possible. Therefore, the above description should not be interpreted as a limitation of the present disclosure, but merely an illustration.

It should be understood that the communication system 100 may be configured as a mobile or nonmobile system. For example, the communication system 100 may be disposed in a nonmobile base station. In another example, the communication system 100 may be disposed in a vehicle. For instance, the communication system may be disposed in an aircraft (e.g., fixed-wing and/or rotorcraft). In another instance, the communication system may be disposed in an automobile. In another example, the communication system 100 may be disposed in a wearable device (e.g., for a ground troop).

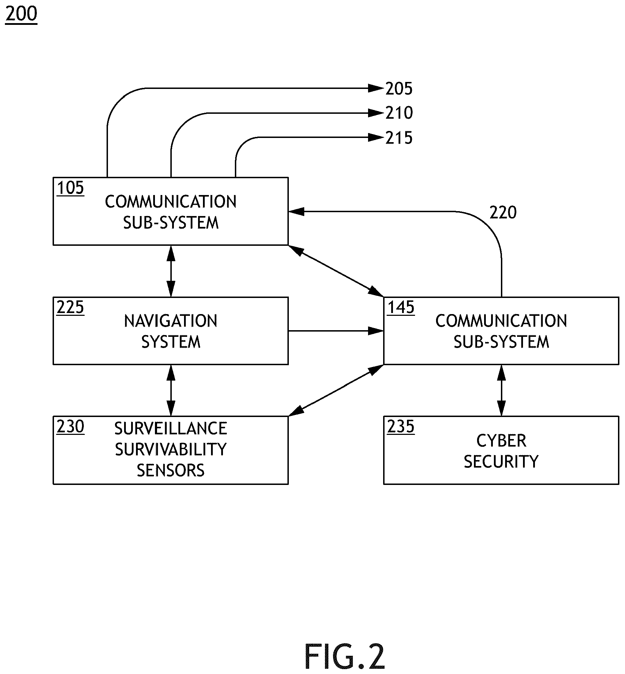

FIG. 2 is a flowchart illustrating an implementation of the communication system 100 with an environment 200 in accordance with one or more embodiments of this disclosure. In embodiments, the communication sub-system 105 is configured to communicate via a primary waveform 205, and at least one of an alternate waveform 210 or a contingency waveform 215. For example, the communication sub-system 105 of an aircraft may be configured to implement an ATDL waveform as the primary waveform 205, having high bandwidth (e.g., > 1 Mbps) for LOS communication with another aircraft.

In another example the communication sub-system 105 may be configured to implement a satellite-based MUOS waveform as the alternate waveform 210. For instance, two aircraft that are initially communicating via a primary waveform 205 may have an alternate waveform 210 configured as a satellite-based MUOS waveform that is ready to be implemented if the two aircraft are likely to be separated by a geographical barrier (e.g., a mountain or valley) that prevents LOS communication via the primary waveform. The alternate waveform 210 may have characteristics that are less than ideal for high-bandwidth communication and/or video-based communication (e.g., the bandwidth for MUOS may be less than 64 kbps), but is still competent for voice and/or critical communication (e.g., such as command and control (C2) data communication and/or position-location information (PLI) communication).

The alternate waveform 210 may be implemented under varying degrees of readiness. For example, the alternate waveform 210 may be actively in use by the communication sub-system 105. For instance, the alternate waveform 210 may be activated at the same time as the primary waveform 205, and actively communicating data, or a portion of the data, that is being communicated by the primary waveform 205. In another example, the software required for communicating via the alternate waveform 210 is loaded into the communication sub-system 105 and a link to a network required for use of the alternate waveform 210 is established, but no communication is being made via the alternate waveform 210 until the communication sub-system 105 is switched, or is predicted to be switched, from using the primary waveform 205 to using the alternate waveform 210. Network link establishment may itself comprise any level of readiness, and may comprise any or all the steps of determining network time, neighbor discovery, and neighbor announcement. In another example, the software required for communicating via the alternate waveform 210 is loaded into the communication sub-system 105, but no steps to establish a network link are taken until the communication system 100 switches, or predicts a switch, of the primary waveform 205 with the alternate waveform 210. In still another example, a waveform may be designated as the alternate waveform 210 (e.g., designated before the mission or flight is initiated), but the software required for communicating via the alternate waveform 210 is not loaded into the communication sub-system until communication system 100 switches, or predicts a switch, of the primary waveform 205 with the alternate waveform 210. In embodiments, the instruction for the communication sub-system 105 to enter the network is provided in the AI input 220.

In another example, the communication sub-system may be configured to implement a high frequency (HF) waveform as the contingency waveform 215. For example, two aircraft that are initially communicating via a primary waveform 205 may have a satellite-based waveform that is ready to be implemented when the two aircraft are separated by a mountain. However, if the satellite or satellite communication system is inactive (e.g., via jamming or malfunction), the two aircraft may still be able to communicate via a contingency waveform 215 configured as a BLOS HF signal further configured as a near vertical skywave (NVIS). The contingency waveform 215 may have a bandwidth lower than the primary waveform 205 (e.g., HF bandwidth is typically less than 16 kbps), but is still capable of voice and/or critical data communication. The contingency waveform 215 may be implemented under varying degrees of readiness, including varying degrees of network readiness, similar to the alternate waveform 215. Additionally, the designation of a waveform as the contingency waveform may be made via input by the artificial intelligence engine 145 (i.e., the designation of a waveform as the contingency waveform may occur after the mission or flight has initiated).

In some embodiments, the communication sub-system 105 is further configured to communicate via an emergency waveform used during exigent or emergency situations. For example, the communication sub-system 105 may be configured to implement an UHF Guard waveform or VHF Guard waveform when the primary waveform 205, the alternate waveform 210, and the contingency waveform 215 are unable to utilized. For instance, during a communication system 100 malfunction event on an aircraft, the communication system 100 may implement a 243.0 MHz UHF Guard waveform, allowing the aircraft to transmit data relating to the position of the aircraft.

In some embodiments, the primary waveform 205, alternate waveform 210, contingency waveform, and/or emergency waveform are in whole or in part a manifestation of a PACE (Primary, Alternate, Contingency, Emergency) communication plan. The PACE communication plan is a mission-specific or task-specific plan that establishes an order or communication precedence list. The plan designates the order in which waveforms will be used until contact can be established.

The communication sub-system 105 may be configured to implement any waveform as a primary waveform 205, an alternate waveform 210, a contingency waveform 215 or an emergency waveform. The communication sub-system 105 may also be configured to designate more than one primary waveform 205, alternate waveform 210, contingency waveform 215, or emergency waveform. Therefore, the above description should not be interpreted as a limitation of the present disclosure, but merely an illustration.

In embodiments, the artificial intelligence engine 145 sends to the communication sub-system 105 artificial intelligence (Al) input 220. The AI input 220 instructs the communication sub-system 105 via the one or more processors 125 to switch waveforms. The Al input 220 may include instructions for any type of waveform switching. For example, the Al input 220 may instruct the communication sub-system 105 to switch from the primary waveform 200 to the alternate waveform 205. In another example, the Al input 220 may instruct the communication sub-system 105 to switch from the primary waveform 200 to the contingency waveform 215. In another example, the Al input 220 may instruct the communication sub-system to switch from the alternate waveform 205 to the primary waveform 200.

In embodiments, the switching of waveforms by the communication sub-system is configured as a seamless switching (e.g., little or no delay or interruption in communication during the switch). For example, two aircraft communicating voice data via the ATDL waveform (e.g., the ATDL waveform designated as the primary waveform 200), may switch, via the communication sub-system 105, to communicating voice data via the MUOS waveform (e.g., the MUOS waveform designated as the alternate waveform), with the communication between the aircraft (e.g., a conversation between the pilots) uninterrupted. Seamless switching between waveforms requires planning to ensure that the new waveform is ready for use when the old waveform is switched off, deactivated, or otherwise disabled (e.g., via a geographical barrier). Upon receiving the Al input 220, the communication sub-system 105 is configured to seamlessly switch between waveforms. For example, the Al input 220 may instruct the communication sub-system 105 to switch from the primary waveform 200 to the alternative waveform 205, and provide other instruction regarding the timing, level of preparedness/readiness, and other details needed for seamless switching. In another example, the Al input 220 may instruct the communication sub-system to switch from the primary waveform 200 to the alternative waveform 200, with the communication sub-system already having instruction regarding the timing, level of preparedness/readiness, and other details needed for seamless switching in memory 130.

In some embodiments, the seamless switching of waveforms, such as from a preceding waveform (i.e., the waveform already in use) to a select waveform, may occur while the communication system 100 is transmitting and/or receiving a message (e.g., the same message). For example, the communication system 100 may be configured to transmit the beginning of a message using the preceding waveform, wherein waveform switching occurs, and the rest of the message is transmitted via the selected waveform. Correspondingly, the communication system 100 may act in a coordinated fashion so that a beginning of a message may be received, wherein waveform switching occurs, and the rest of the message is received via the selected waveform. Seamless switching may also prevent at least one characteristic of the message (e.g., voice data from an audio/visual message) from being lost, interrupted, or delayed. For example, if the beginning of an audio/video message is being transmitted via a high-bandwidth preceding waveform, and a switch to a lower bandwidth waveform occurs, the video part, or characteristic, of the message may not be transmitted due to bandwidth restrictions, however, the audio part, or characteristic, of the same message will continue to be transmitted via the selected waveform without any loss of audio data.

The artificial intelligence engine 145 may receive operational data (e.g., data related to the operation of an aircraft) from one or more operation systems. The operational data includes all gathered sensor data that may be used to feed the artificial intelligence engine 145, wherein the artificial intelligence engine may then 145 predict needed changes within the communication system 100 as the mission progresses. For example, the artificial intelligence engine 145 may receive operational data from a navigation system 225. Operational data from the navigation system 225 may include any navigation-related operational data (e.g., positioning navigation and timing (PNT). For instance, the operational data from the navigation system may include geographical data (e.g., terrain data, map data, or earth curvature data) In another instance, the navigation system may include threat detection/mitigation data (e.g., the navigation system detects an adversary and that the aircraft may need to dive into a valley to avoid the adversary). The navigation data may also include satellite orbital location data and network node data.

In another example, the artificial intelligence engine 145 may receive operational data from a surveillance, sensor, and survivability system 230. The surveillance, sensor and survivability system 230 may include one more security-based systems or modules configured to detect and mitigate threats. For example, the surveillance, sensor, and survivability system 230 may include a tactical automated security system (TASS) or a TASS-like system. The surveillance, sensor and survivability system 230 may provide any type of operational data to the artificial intelligence engine 145. For example, the surveillance, sensor, and survivability system 230 may include sensor data that indicating the intrusion by an adversary within a defined space. In another example, the surveillance, sensor, and survivability system 230 may include surveillance data indicating the positions of multiple adversaries. In another example, the surveillance, sensor, and survivability system 230 may include survivability data, such as an indication that the aircraft will attempt to jam the communication waveform of an adversary, which may require the communication sub-system to switch from the primary waveform 200 to the alternate waveform 205. Survivability data may also include other adversarial countermeasures that may have an effect on the communication system 100, such as weapon discharging and evasive maneuvers. In embodiments, the surveillance, sensor and survivability system 230 may be configured as separate systems (e.g., a surveillance system, a sensor system, and a survivability system). Additionally, operational data may use any situational awareness data, such as the aforementioned PNT data and RF spectrum information). Additionally, operational data may include data from the communication system 100 and any other available communication data derived from our side the communication system 100 (e.g., a communication architecture for an aircraft or a fleet of aircraft).

In another example, the artificial intelligence engine 145 may receive operational data from a cyber security system 235. For instance, operational data from the cyber security system may include spoofing attempts by an adversary (e.g., that the communication system 100 is receiving data requests from an adversary falsely appearing as an ally). In another example, the cyber security system may be configured as a cyber intrusion detection system (CIDS) configured to detect hacking or hacking activity on an aircraft, which would send relevant data regarding the hacking, or security breach, to the artificial intelligence engine 145.

Once operational data is received by the artificial intelligence engine 145, the artificial intelligence engine 145 may begin the process of determining which waveform the communication sub-system may need to switch to (e.g., the selected waveform), determining the characteristics of the waveform and the switching process, and create the Al input 220 that will be sent to the communication sub-system. For example, the artificial intelligence engine may utilize machine learning, through the development of a machine learning model, to analyze the operational data and predict when a waveform switch is necessary, and to which waveform should the communication sub-system 105 be switched.

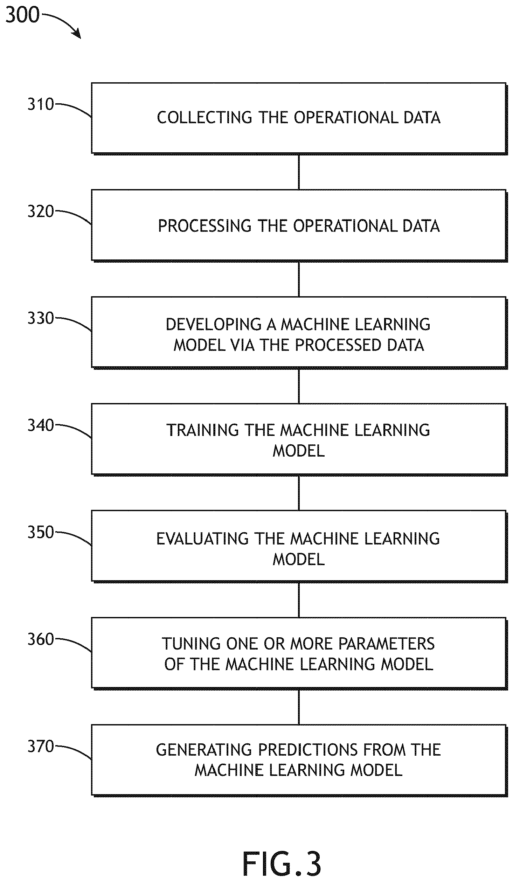

FIG. 3 is a flowchart illustrating the method 300 for generating a machine learning model, in accordance with one or more embodiments of this disclosure. In embodiments, the method 300 includes a step 310 of collecting the operational data. For example, the artificial intelligence engine 145 may receive operational data from one or more systems. The artificial intelligence engine 145 may also request operational data from one or more systems.

In embodiments, the method 300 further includes a step 320 of processing the operational data. For example, the operational data may need to be checked for errors and/or biases removed. In another example, the operational data may be normalized, or further prepared for downstream calculation.

In embodiments, the method 300 further includes a step 330 of developing a machine learning model via the processed data. Any machine learning model may be developed using any type of learning algorithms including but not limited to linear regression, logistic regression, decision trees, K-means, principal component analysis (PCA), Support Vector Machines (SVM), Naive Bayes, Random Forest and Neural Networks.

In embodiments, the method 300 further includes a step 340 of training the machine learning model. For example, operational data obtained from the one or more systems may be used to improve the predictions of the machine learning model. For instance, characteristics or inputs of the operational data may be weighted and/or biased in an iterative process, with the goal of the accuracy of the machine learning model increasing after each iteration or cycle.

In embodiments, the method 300 further includes a step 350 of evaluating the machine learning model. For example, the machine learning model may be tested against a control dataset. For instance, the control dataset may include a predetermined set of operational data. In another instance, the control dataset may include new operational data received from the one or more operation systems.

In embodiments, the method further includes a step 360 of tuning one or more parameters of the machine learning model. Tuning the one or more parameters of the machine learning model (e.g., over one or more cycles) may increase the accuracy of the machine learning model. A threshold for how many cycles of parameter tuning is performed may bet set based on the accuracy of the machine learning model.

In embodiments, the method further includes a step 370 of generating predictions from the machine learning model. For example, artificial intelligence engine 145, employing the machine learning model, may be queried on whether the primary waveform 205 (e.g., a LOS ATDL waveform) will no longer be functional for an aircraft as the aircraft enters a valley. The artificial intelligence engine may generate an Al input 220 for the communication sub-system 105 based on the prediction by the machine learning model. The artificial intelligence engine may be queried on a regular basis (e.g., every minute) or conditions warrant a query (e.g., upon the detection of an adversary).

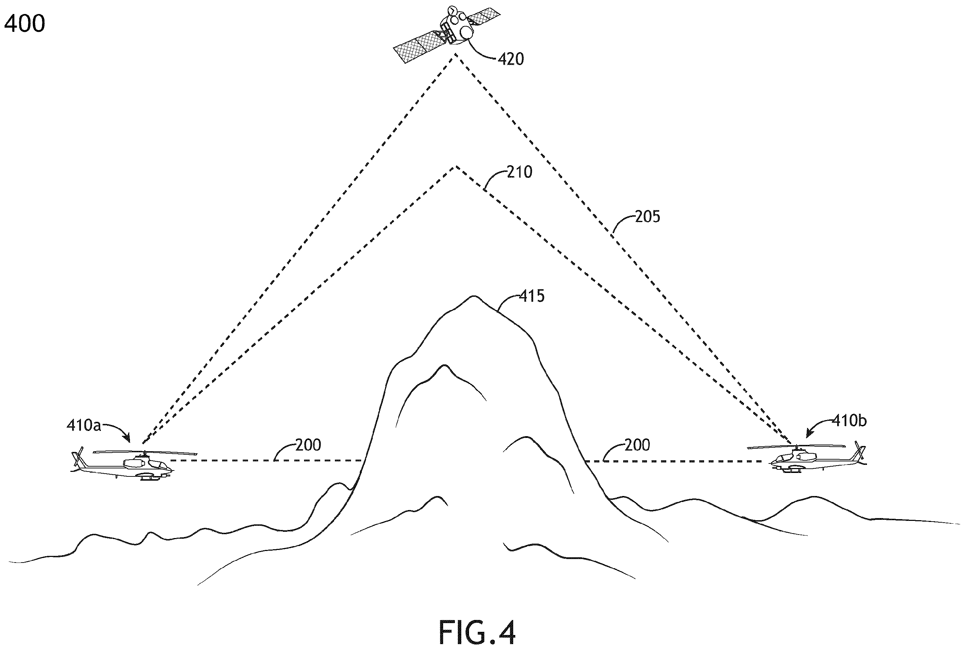

FIG. 4 illustrates an example environment 400 for the communication system 100, in accordance with one or more embodiments of this disclosure. In this example environment 400, two helicopters 410a, 410b in communication with each other the communication systems 100 are temporarily separated each other as they skirt across opposing sides of a mountain 415. The primary waveform 200 for the helicopters 410a, 410b is the LOS ATDL. However, the ATDL waveform will not be effective for communication once LOS is disrupted by the temporary separation. Before separation occurs, the artificial intelligence engine 145, having received operational data and being queried on the status of the helicopter 410a, 410b and the communication sub-system 105, may predict that separation will occur along with the disabling of the ATDL waveform, and send an Al input 220 to the communication sub-system 105 to prepare the communication sub-system 105 for switching the waveform for communication between the helicopters 410a, 410b from the primary waveform 200 to the BLOS alternate waveform 205 (e.g., a SATCOM waveform, such as MUOS). The artificial intelligence engine 145 may also receive data that the alternative waveform 205 is also unavailable (e.g., due to jamming or malfunction of a satellite 420), in which case, the artificial intelligence engine 145 may send an Al input 220 to the communication sub-system 105 to prepare the communication sub-system for switching the waveform to the contingency waveform (e.g., a HF NVIS waveform capable of reflecting off of the ionosphere). Because the artificial intelligence engine is capable of predicting when a primary waveform 200, an alternative waveform 205, a contingency waveform 210, and/or an emergency waveform can or cannot be used, waveform switching can be performed seamlessly without loss of data, voice, or other types of communication.

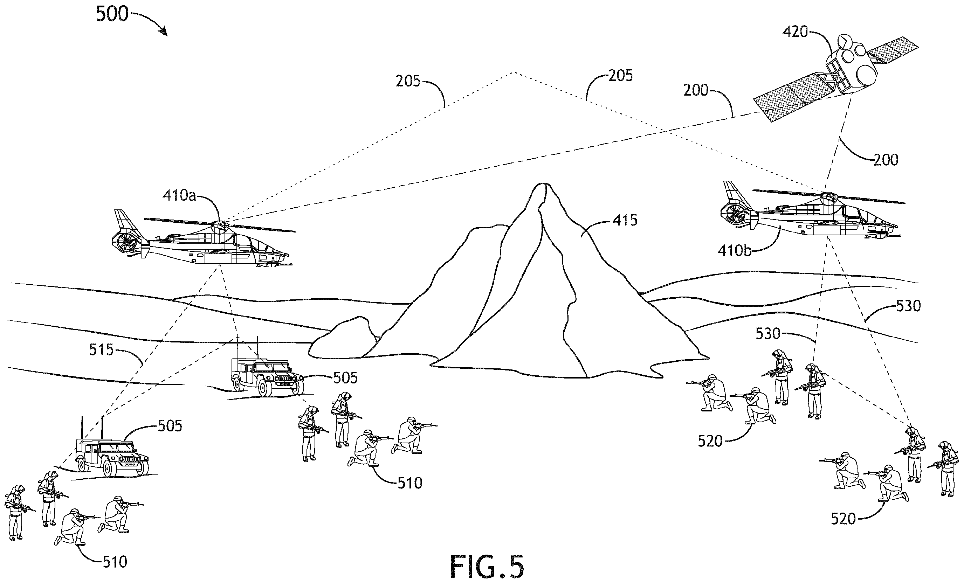

FIG. 5 illustrates an example environment 500 for the communication system 100, in accordance with one or more embodiments of this disclosure. In this example environment 500, two helicopters 410a and 410b are initially communicating via a primary waveform 200 (e.g., a SATCOM waveform, such as MUOS). However, signaling from the satellite 420 to one of the helicopters 410a is blocked by the mountain 415. Before the blocking of the primary waveform 200 by the mountain 415 occurs, the artificial intelligence engine 145 of one of both helicopters 410a, 410b, having received operational data and being queried on the status of the helicopter 410a, 410b and the satellite 105, may have predicted that blocking of the primary waveform 200 was to occur, and send an Al input 220 to the one or more communication sub-systems 105 to prepare the communication sub-system 105 for switching the waveform for communication between the helicopters 410a, 410b from the primary waveform 200 to the BLOS alternate waveform 205 (e.g., HF). The example environment 500 also includes ground vehicles 505 and ground troops 510 in communication. The ground vehicles 505 and ground troops 510 may be in communication with one or more aircraft configured with the communication system 100 (e.g., helicopters 410a, 410b) and may themselves have vehicle-configured and/or troop-configured communication systems 100, each having the ability to predict the optimal mode of communication based on operation data and the artificial intelligence engine 145.

The example environment 500 also includes adversarial troops 520 transmitting jamming signals 530 to one of the aircraft (e.g., helicopter 410b). The communication system 100, through either detection of the jamming signal 530 or prediction of the adversarial troops 520 transmitting jamming signals 530, may automatically switch to communicate via a waveform that will not be jammed by the jamming signal 530 used by the adversarial troops 520.

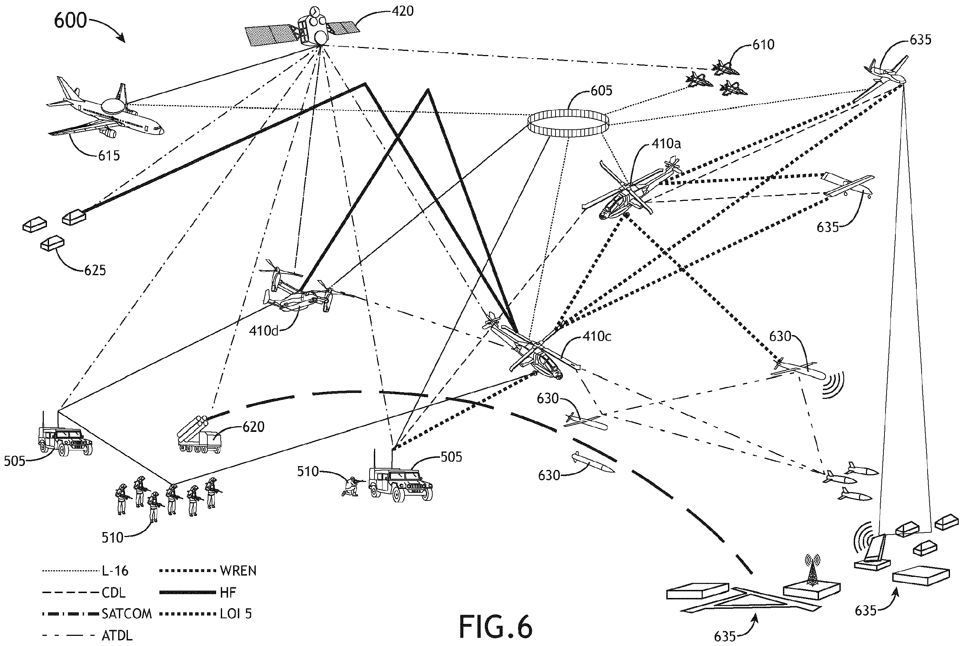

FIG. 6 illustrates an example complex environment 600 for the communication system 100, in accordance with one or more embodiments of this disclosure. This complex environment 600 includes many military units and waveforms that may be used during a mission. For example, the complex environment 600 may use link-16 waveforms (operating via a Link-16 network, depicted as a ring 605 in FIG. 6), common data link (CDL) waveforms, SATCOM waveforms, WREN waveforms (e.g., WREN-TSM and/or WREN-NB), and HF waveforms. The complex environment 600 may also use waveforms configured for maintaining a high level of interoperability (LOI) for manned-unmanned teaming (MUM-T), such as LOI 5. Waveforms used for MUM-T may include any of the aforementioned waveforms, other waveforms known in the art, or waveforms yet to be established.

The military units used within the example complex environment 600 include any available military units including but not limited to satellites 420, helicopters 410a, 410c, 410d, fighter aircraft 610, airborne early warning and control aircraft (AWACS) 615, ground troops 510, ground vehicles, mobile missile-launchers 620, tactical operations center (TOC) 625, and guided missiles 630. One or more military units within the example complex environment 600 may be configured with the communication system, allowing automated and anticipated switching of waveforms when conditions within the mission warrant, the switching of waveforms based on operational data analyzed by the artificial intelligence engine. The communication system 100 increased communication efficiency between military units, which may increase mission success efficiency against adversarial units 635.

The development of the machine learning model may initiate before or after a mission or flight. For example, the machine learning model may be fully developed as the communication system 100 is implemented in an aircraft. For instance, the machine learning model may be fully trained, evaluated, and tuned before a mission. In another example, the machine learning model may be trained, evaluated and/or tuned before a mission, the undergo more training, evaluation, and or tuning after the mission has initiated. In another example, the machine learning model may be trained, evaluated, and/or tuned after the mission has initiated. Multiple variations in the method 300 and the carrying out of the method 300 are possible. Therefore, the above description should not be interpreted as a limitation of the present disclosure, but merely an illustration.

In embodiments, the communication system 100 may be configured tear down, or deactivate, waveforms so that only the waveforms that are currently needed are active (e.g., loaded, on-line or instantiated). By only keeping needed waveforms on-line, fewer LRUs, or components for LRUs may be needed, reducing weight and drag costs to the aircraft. For example, an aircraft may not need to have various pairings of waveforms running simultaneously, such as the SATURN and VULOS (UHF) waveforms or the SINGARCS and WREN-NB waveforms. For instance, the system 100 may configured to initially have the WREN-NB protocol instantiated on a digital processing unit, then later, tear down the WREN-NB waveform, and replace it with an instantiation of the SINCGARCS waveform using the same processing unit. The instruction to deactivate the waveform may be configured an Al input 220. For example, the artificial intelligence engine 145 may be further configured to determine unnecessary waveforms that may be deactivated within the communication system 100.

Additionally, the communication system 100 may be configured to activate ground-based waveforms. For example, the artificial intelligence engine 145 on an aircraft may be configured to determine whether a ground network that supports transit networking (e.g., such as WREN-TSM) may be used to communicate to another aircraft (e.g., the ground network linking on both ends to the transmitting aircraft and the receiving aircraft).

The ability of the communication system 100 to anticipate the use of high bandwidth waveforms (e.g., primary waveforms 200) while operating with lower bandwidth waveforms (e.g., alternate waveforms 205 and contingency waveforms 215) may maximize data transfer for brief windows when the primary waveform 200 is available. The communication system 100 may also use a common time source and/or frequency reference among the many systems, facilitating faster network entry for a node in a new waveform.

The reduced use of multiple waveforms may also reduce the power requirements for the aircraft, as well as reduce the thermal load of the aircraft, as fewer transmitters will be processing and transmitting the multiple waveforms. The reduced waveform usage may also increase available bandwidth for other nodes within the network.

In embodiments, the communication system 100 is configured to accept manual control. For example, a pilot may manually select a waveform for use by the communication sub-system 105 (e.g., as directed by a squad leader). In another example, a pilot may select a waveform for use that is different than the waveform chosen by the artificial intelligence engine. For example, the pilot may have knowledge that the security of the waveform chosen by the artificial intelligence engine has been compromised. Any combination or configuration of manual control and automated control over the communication system 100 is possible. Therefore, the above description should not be interpreted as a limitation of the present disclosure, but merely an illustration.

The communication system 100 may be configured with different levels of indication to the pilot that the waveform has changed. For example, the communication system 100 may indicate audibly through a speaker and/or visually through an indicator light or an indication on a display screen that the wave form has, or is going to be, switched. In another example, no indication is given to the pilot regarding the switching of a waveform. For instance, the pilot may be apprised of the switch from a high-bandwidth primary waveform 200 to a low-bandwidth alternate waveform 205 only through the observation that the once-audio/visual communication is now audio only (e.g., the communication system 100 automatically adjusts to reduce data load when transitioning to the lower-bandwidth waveform, such as stopping the video stream but continuing with voice and situational awareness data).

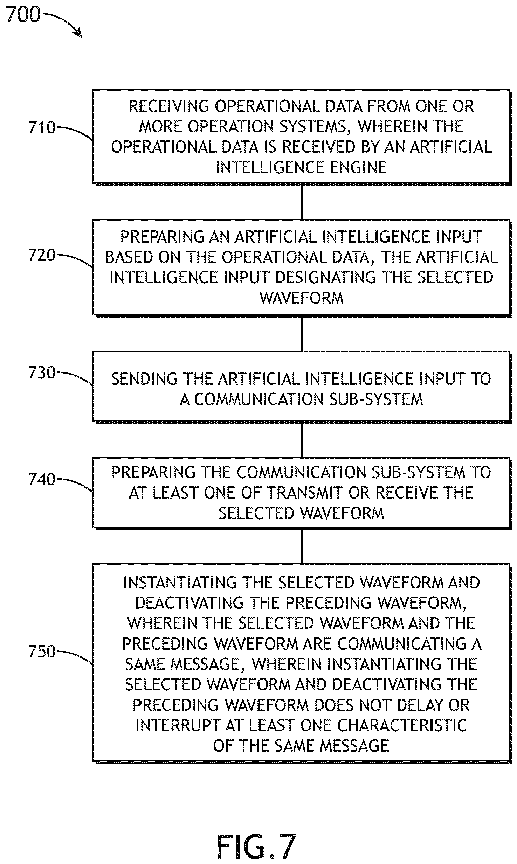

FIG. 7 is a flowchart illustrating a method 700 for switching a waveform used by a communication system from a preceding waveform to a selected waveform, in accordance with one or more embodiments of this disclosure. In embodiments, the method 700 includes a step 710 of receiving operational data from one or more operation systems, wherein the operational data is received by an artificial intelligence engine 145. In embodiments, the method 700 includes a step 720 of preparing an artificial intelligence input based on the operational data, the artificial intelligence input designating the selected waveform. The step 720 may further comprise and/or incorporate one or more steps from the method 300 and include a step of applying query data to the machine learning model to generate the artificial intelligence input. The query data comprises newly gathered operational data from the one or more operation systems. For example, once the machine learning model has been developed, trained, evaluated, and or tuned, query data from the one or more operation systems will be applied to the machine learning model, resulting in data that will be used in the preparation of the Al input 220.

In embodiments, the method 700 includes a step 730 of sending the Al input 220 to the communication sub-system 105. In embodiments, the method 700 includes a step 740 of preparing the communication sub-system 105 to at least one of transmit or receive the selected waveform. As described herein, the selected waveform may be a primary waveform 205, an alternate waveform 210, a contingency waveform 215, or an emergency waveform.

In embodiments, the method 700 includes a step 750 of instantiating the selected waveform and deactivating the preceding waveform, wherein the selected waveform and the preceding waveform are communicating a same message, wherein instantiating the selected waveform and deactivating the preceding waveform does not delay or interrupt at least one characteristic of the same message. For example, a preceding waveform, such as a MUOS waveform designated as the primary waveform 205, may be switched over to a selected waveform, such as a less robust HF waveform designated as the alternate waveform 210. The switch may occur while a message containing critical PLI information (e.g., a characteristic of the message) along with less critical types of data are being communicated via the MUOS waveform. The communication sub-system 105 may then be configured to ensure that the PLI information is not lost during the transition from the MUOS waveform to the HF waveform, while some or all of the less critical information is delayed or dropped.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A communication system comprising:
a communication sub-system (105) comprising:
one or more transmitters (110) configured to transmit an output signal, the one or more transmitters collectively operable over a plurality of waveforms;
one or more receivers (115) configured to receive an input signal, the one or more receivers collectively operable over the plurality of waveforms;
one or more processors (125) coupled to the one or more transmitters and the one or more receivers;
a memory (130) coupled to the one or more processors and having instructions stored thereon, which when executed by the one or more processors, causing the one or more processors to instantiate a selected waveform based on an artificial intelligence input, wherein at least one of the one or more transmitters transmit an output signal of the selected waveform and at least one of the one or more receivers receive an input signal of the selected waveform; and
an artificial intelligence engine (145) in communication with the one or more processors and the memory, wherein the artificial intelligence engine is configured to:
receive operational data from one or more operation systems;
determine, based on the operational data, the selected waveform;
prepare the artificial intelligence input based on the selected waveform; and
send the artificial intelligence input to the one or more processors.

2. The communication system of claim 1, wherein the artificial intelligence engine is further configured to apply a machine learning model to analyze the operational data.

3. The communication system of claim 2, wherein the artificial intelligence engine is further configured to generate the machine learning model, comprising:
collecting the operational data;
processing the operational data;
developing the machine learning model via the processed data;
training the machine learning model;
evaluating the machine learning model; and
tuning one or more parameters of the machine learning model.

4. The communication system of any preceding claim, wherein the one or more processors are further configured to:
receive the artificial intelligence input;
prepare the communication sub-system to transmit the output signal of the selected waveform; and
prepare the communication sub-system to receive the input signal of the selected waveform.

5. The communication system of any preceding claim, wherein the selected waveform comprises a primary waveform, an alternate waveform, a contingency waveform, or an emergency waveform.

6. The communication system of any preceding claim, wherein the artificial intelligence input is further configured to instruct the one or more processors to deactivate a preceding waveform.

7. The communication system of claim 6, wherein a switching of the preceding waveform to the selected waveform is coordinated.

8. The communication system of claim 7, wherein the preceding waveform and the selected waveform are communicating a same message.

9. The communication system of claim 8, wherein the switching of the preceding waveform to the selected waveform is seamless, wherein at least one characteristic of the same message is communicated without interruption or delay during the switching of the preceding waveform to the selected waveform.

10. The communication system of any preceding claim, wherein the one or more operation systems includes one or more of a navigation system, the communication system, a communication architecture, a surveillance system, a sensor system, a cyber security system, or a survivability system.

11. The communication system of any preceding claim, wherein the artificial intelligence input is further configured to instruct the one or more processors to enter a network.

12. The communication system of any preceding claim, wherein the artificial intelligence engine is further configured to determine unnecessary waveforms that may be deactivated within the communication system.

13. The communication system of any preceding claim, wherein the communication sub-system is disposed in a vehicle.

14. A method to switch a waveform used by a communication system from a preceding waveform to a selected waveform comprising:
receiving operational data from one or more operation systems, wherein the operational data is received by an artificial intelligence engine (145);
preparing an artificial intelligence input based on the operational data, the artificial intelligence input designating the selected waveform;
sending the artificial intelligence input to a communication sub-system;
preparing the communication sub-system to at least one of transmit or receive the selected waveform;
instantiating the selected waveform and deactivating the preceding waveform, wherein the selected waveform and the preceding waveform are communicating a same message, wherein instantiating the selected waveform and deactivating the preceding waveform does not delay or interrupt at least one characteristic of the same message.

15. The method of claim 14, wherein the preparing the artificial intelligence input based on the operational data further comprises at least one of:
processing the operational data;
developing a machine learning model via the processed data;
training the machine learning model;
evaluating the machine learning model; and
tuning one or more parameters of the machine learning model;
applying query data to the machine learning model to generate the artificial intelligence input.
